# EUROPEAN PATENT SPECIFICATION

(11) **EP 4 549 757 B1**
(45) Date of publication and mention of the grant of the patent: **29.07.2026**
(21) Application number: 23207220.7
(22) Date of filing: 31.10.2023
(51) Int. Cl.: F16B 35/06

(54) **JOINT ASSEMBLY OF A VEHICLE AND METHOD FOR CONNECTING AT LEAST TWO COMPONENTS**
FÜGEANORDNUNG EINES FAHRZEUGS UND VERFAHREN ZUM VERBINDEN VON MINDESTENS ZWEI KOMPONENTEN
MONTAGE D'ASSEMBLAGE D'UN VÉHICULE ET MÉTHODE DE RACCORDEMENT D'AU MOINS DEUX COMPOSANTS

(43) Date of publication of application: 07.05.2025
(73) Proprietor: Volvo Car Corporation, 405 31 Göteborg (SE)
(72) Inventor: CARLHOLMER, Stefan, 40531 Göteborg (SE)
(74) Representative: Kransell & Wennborg KB

(56) References cited:
- JP-A- S5 231 266
- US-A- 1 953 305
- US-A- 1 969 796
- US-A- 4 966 512
- US-A1- 2014 079 510

## Description

### TECHNICAL FIELD

The present disclosure relates to a joint assembly of a vehicle and a method for connecting at least two components of a vehicle.

### BACKGROUND ART

For some components of a vehicle, it is required that these are sealing connected to each other, thereby preventing leakage from the connection of these components, e.g., a battery housing and a chassis part as components, where liquid may leak out if these are not connected to each other with a sealing contact. Such sealing contact may be established by a connecting element, e.g., a screw, being fastened to the components. However, it has been experienced that the available connecting elements, such as screws, may not provide sufficient sealing of components, which may result in a leak.

The preamble of the joint assembly of claim 1 is described in US4966512A and US 1969796A.

### SUMMARY

The above problem is at least partially solved or alleviated by the subject matter of the independent claims of the present disclosure, wherein further examples are incorporated in the dependent claims. The invention is defined by the subject-matter of the independent claims.

According to a first aspect, there is provided a connecting element for connecting at least two components of a vehicle, the connecting element comprising: an at least partially threaded shank, a head having a surface section coupled to an end of the shank, and a protrusion configured to form a sealing contact with one of the at least two components of the vehicle, when the connecting element is fastened to the at least two components of the vehicle, the protrusion being at least partially circumferentially arranged around the shank, wherein a material of the protrusion comprises a metal.

Accordingly, the connecting element of the first aspect has a protrusion that forms the sealing contact with one of the two components. The material of this protrusion comprises metal. In particular, the material of the protrusion may mostly comprise metal. As a non-limiting example, any of steel, iron, copper, aluminum, nickel or any combination of the aforesaid may be used as metal material. The metal material of the protrusion ensures a rigidity of the protrusion that allows to establish a tight sealing contact with the respective component when the connecting element is fastened to the components. Specifically, the protrusion allows to apply a high local pressure at one, two or more of the components that may prevent leakage out of the connection of the components. Specifically, the protrusion may be provided with a sufficient rigidity such it may deform the component, thereby forming the tight sealing contact. The local pressure by means of the protrusion is much higher than when the surface section itself would be pressed against one of the components, thereby forming the sealing contact. If the protrusion would not comprise metal as material, e.g., if the protrusion would be in the form of a sealing ring from an elastomer, the protrusion could not achieve a tight sealing contact due to a very limited local pressure appliable via the elastomer sealing ring to the components.

The sealing contact may in particular be formed between the surface section or head of the connecting element and the respective component. Besides forming the sealing contact between the protrusion and one of the components, the sealing contact may also be formed between the components or, in other words, in the connection of these components. For example, the local pressure applied by the protrusion on the component with which it comes into contact during fastening, may be sufficiently high to also apply a local pressure of the component in contact with the protrusion to the other component of the components, thereby also establishing the sealing contact between these two components. The sealing contact may be a substantially fluid-tight or liquid-tight sealing contact.

That the protrusion is at least partially circumferentially arranged around the shank means that at least a part of the extension of the protrusion in length surrounds the shank. It is also possible that the protrusion is circumferentially arranged in length around the shank, e.g., substantially in full. However, it is also possible that the extension along its circumferential extension has one or more gaps in between. In particular, the protrusion may be formed as an interrupted, i.e., comprising gaps in its longitudinal extension, or uninterrupted ring around the shank.

The protrusion may be arranged on the surface section. The protrusion may be extending in height from the surface section towards or, in other words, in the direction of an end of the shank opposite the end of the shank that is coupled to the surface section.

The head may be configured for fastening the connecting element to the components. For example, the head may have a hexagonal or any other shape at its perimeter that may be gripped by a fastening tool for fastening the connecting element. Alternatively, or additionally, for example, the head at its surface section opposite the surface section having the end of the shank may have a slot or recess, e.g., in the form of a cross, for a screwdriver as fastening tool.

In an example, the material of the protrusion may be a metal. This means, that the protrusion is fully made from a metal. The connecting element, in particular the head and/or the shank, may also comprise a metal or be made from a metal or, alternatively, any other material, e.g., a plastic material. In the case where the connecting element, in particular the head and/or the shank, comprise or be made from a metal, the same or a different metal may be used for the protrusion and the head and/or shank. For example, depending on the requirements of the connecting element, e.g., the head and/or shank, another metal may be used than for the protrusion, which may require a higher rigidity to form the sealing contact.

In an example, the protrusion and the head may be integrally formed. Specifically, the shank, head and protrusion may be integrally formed. In particular, the entire connecting element may be integrally formed with the protrusion. Thereby, the connecting element may be easily and cost-effectively manufactured as a one-piece element by casting and/or machining, for example.

In an example, the protrusion may have a tapered shape. In particular, the protrusion may be tapered along its height or, in other words, from the surface section towards or in the direction of an end of the shank opposite the end of the shank that is coupled to the surface section. By means of the tapered shape, the applied local pressure at one, two or more of the components may be increased, thereby even more effectively preventing leakage between or out of any one of the components.

In an example, the protrusion may have an edge facing away from the head. In other words, the edge may be facing away from the surface section or towards the end of the shank opposite of the end of the shank that is coupled to the surface section. Such edge may be sharp. In this case, the protrusion may have a substantially V-formed shape. Thereby, not only the local pressure may be increased but also a deformation of at least one of the components may be achieved, thereby creating a tighter sealing contact.

In an example, the protrusion may be configured to plastically deform at least one of the at least two components of the vehicle. For example, the deformation may be directly. In this case, the component in contact with the protrusion may be directly deformed by the protrusion. Also, or alternatively, for example, the deformation may be indirectly. In this case, the other component of the components may be deformed by the component being directly deformed by the protrusion. Alternatively, or additionally, when a metal sheet such as a washer is placed between the protrusion and the component in contact with the protrusion, the protrusion may directly deform the metal sheet and thereby indirectly, via the metal sheet, deform the component in contact with the washer or the components.

In an example, the protrusion may be configured to plastically deform the at least one of the at least two components by forming a groove into said component, when being fastened to the at least two components of the vehicle. The forming may be done pressing and/or cutting the groove into the material of said component. For example, when the connecting element is fastened to the components, the connecting element may be rotated during fastening, thereby also rotating the protrusion, and cutting the groove therein. The groove may accordingly correspond in shape to the shape of the protrusion. Due to a limited plastic deformability of the said component, in particular when it comprises metal or is made from metal, a particularly high local pressure at the contact interface between the protrusion and the groove may be provided, thereby making the sealing contact tighter.

According to a second aspect of this disclosure, there is provided a joint assembly of a vehicle, comprising: the connecting element of the first aspect, a first component being one of the two components of the vehicle, and a second component being the other one of the two components of the vehicle, the first component being attached to the second component by the connecting element, and the protrusion having formed a sealing contact with at least the second component of the vehicle by forming a groove in the second component, the groove being formed by plastically deforming the second component by means of the protrusion while or due to fastening the connecting element to the at least two components of the vehicle.

The joint in the assembly refers to the joint being established by the connecting element with at least one of the components and/or by the connecting of the components with each other and/or the connecting element. If the connecting element is in the form of a screw or bolt, for example, the joint assembly may alternatively be referred to as a screw or bolt joint assembly, for example.

In an example, the head of the connecting element may be in contact with the second component, when the connecting element is fastened to the at least two components of the vehicle. Specifically, the surface section of the head may be in contact with the second component, i.e., an outer surface thereof.

According to the invention, the joint assembly further comprises at least one metal sheet being arranged between the head of the connecting element and the second component, wherein the head of the connecting element is in contact with the at least one metal sheet, when the connecting element is fastened to the at least two components of the vehicle. Despite the metal sheet between the head and the second component, e.g., in the form of a washer, the protrusion plastically deforms the second component, by forming a groove therein, thereby providing a tight sealing contact. Moreover, by means of the metal sheet, a particularly secure connection of the connecting element to the second component may be provided.

In an example, the first component may be an external component, and the second component may be an internal component. For example, the external component may be a peripheral component on the outer side of the vehicle, such as a battery or part thereof, e.g., a battery housing, or a chassis part. For example, the internal component may be a component arranged inside the vehicle body, e.g., inside the chassis part, such as a part of the passenger compartment, e.g., the floor.

However, it is noted that generally, any components of the vehicle which may be joined to each other may be provided in the assembly. For example, the components may be from a vehicle body or chassis, a battery housing, or similar. In particular, the components may be located internally and/or externally of the vehicle and where a leak may occur. For example, one or two of the components may be housing or chassis components. For example, when driving in high water or the vehicle is flushed with water by rain or carwash, water may enter into the vehicle through any one of the components. For example, one or more of such components may be from a battery housing of a battery, e.g., a dry battery. Water entering into the battery in the aforementioned scenarios could damage the battery. In any case, by means of the joint assembly of the second aspect of this disclosure, a leakage into or out of the components may be prevented by connecting the components in a substantially fluid- or liquid-tight manner with one another by means of the connecting element forming the sealing contact.

According to a third aspect of this disclosure, there is provided a method for connecting at least two components of a vehicle, the method comprising: arranging a first component being one of the two components of the vehicle, and a second component being the other one of the two components of the vehicle, such that a first hole in the first component and a second hole in the second component are in alignment with each other, inserting a connecting element according to the third aspect of this disclosure at least into the second hole, and in particular into the first hole, fastening the connecting element, and plastically deforming, by the protrusion of the connecting element, the second component, in particular part of the second component, in particular the second component facing the head of the screw.

In an example, plastically deforming of the second component may be performed by forming a groove into the second component. This allows to establish a particularly tight sealing contact.

In an example, a tightening torque for fastening the connecting element may be in the range from 20 Nm to 90 Nm. It has been found that tightening torques in this range allow to achieve the tight sealing contact, in particular by means of the plastic deformation as explained above, without overtightening, which could lead to a loose connection and an untight sealing contact. The exact tightening torque to be used may depend on one or more dimensions of the connecting element, in particular the size of the threaded shank. For example, for an M8 sized threaded shank, the tightening torque may be 24 Nm, for an M10 sized threaded shank, the tightening torque may be 50 Nm, and/or for an M12 sized threaded shank, the tightening torque may be 80 Nm.

It is noted that the above examples may be combined with each other irrespective of the aspect involved. Accordingly, the method may be combined with structural features and, likewise, the connecting element and the joint assembly may be combined with features described above with regard to the method and features described with respect to each other.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a connecting element;
- Figure 2: shows a joint assembly comprising the connecting element of Fig. 1; and
- Figure 3: shows another joint assembly comprising the connecting element of Fig. 1.

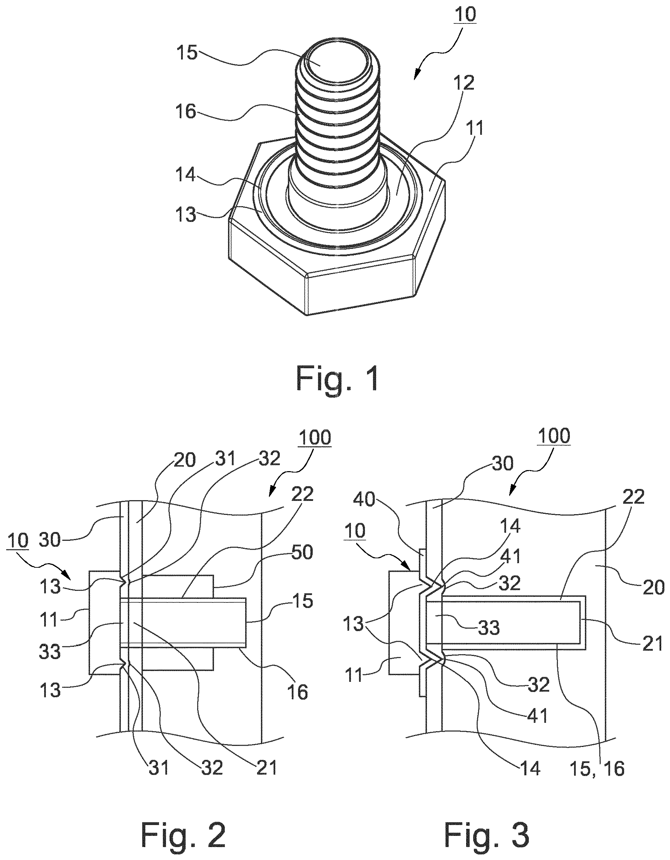

The joint assembly shown in Figure 2 is not encompassed by the wording of the claims.

### DETAILED DESCRIPTION

The Figures are merely schematic representations and serve only to illustrate examples of the disclosure. Identical or equivalent elements are in principle provided with the same reference signs.

Figure 1 shows a connecting element 10. The connecting element 10 is exemplary formed as a screw or bolt in this example. The connecting element 10 comprises a head 11 and a shank 15 extending therefrom. Specifically, one end of the shank 15 is attached to the head 11 at a surface section 12 thereof. The opposite end of the shank 15 is free and may be inserted through holes 21, 33 of components 20, 30 of a vehicle (see Figs. 2, 3). The shank 15 comprises an external threading 16 on at least a portion thereof.

On the surface section 12, a protrusion 13 is formed. The protrusion 13 is circumferentially arranged around the shank 15, in particular in the form of a protrusion ring. The protrusion 13 may be made from metal. Specifically, the connecting element 10 may be an integral one-piece part, which may be made from metal. The protrusion 13 in this example has a V-shape, the protrusion 13 being tapered along its height extending from the surface section 12 towards the free end of the shank 15. Thereby, the protrusion 13 has a sharp edge 14.

The connecting element 10 is being used to establish a joint assembly 100 with the components 20, 30 in Figs. 2, 3. In Fig. 2, the joint assembly 100 further comprises a nut 50. However, any other fastening means for fastening the connecting element 10 to the components 20, 30 may be used. In Fig. 3, the joint assembly 100 further comprises a metal sheet 40. It is also possible that the joint assembly 100 comprises both, a nut 50 or any other fastening meanings and the metal sheet 40.

In the joint assembly 100 of Fig. 2, according to a method for connecting the two components 20, 30 with one another, the first component 20 and the second component 30 have been arranged with respect to each other such that a first hole 21 in the first component 20 and a second hole 33 in the second component 30 are in alignment with each other. Then, the connecting element 10 was inserted with the free end of the shank 15 into both holes 21, 33 and fastened to the nut 50 located behind the first component 20. For fastening, the external threading 16 of the shank 15 interlocks with an internal threading 22 of the nut 50.

When fastening, specifically at the end of the fastening process, the head 11 may come into contact with the second component 30. Specifically, the protrusion 13 with its edge 14 (see Fig. 3) may plastically deform the second component 30, thereby creating a deformation 32 in the second component 30. Specifically, by means of fastening the connecting element 10, a groove 31 may be cut into the second component 20. This applies a high local pressure of the second component 30 at the location of the groove 31 and edge 14 of the protrusion 13 to the first component 20, thereby creating a, in particular substantially liquid-tight, sealing contact between the two components 20, 30 and/or the connecting element 10. The protrusion 13 may optionally also plastically deform the first component 22 as indicated by the deformation 32 extending into the first component 20, thereby applying an even higher local pressure of the second component 30 to the first component 20. Hence, it is unlikely that liquid may pass through the thereby established sealing contact.

In the joint assembly 100 of Fig. 3, the same method is being carried out with a metal sheet 40 being placed between the head 11 and the second component 30. Further, in this example, the first component 20 is exemplary shown to include the internal threading 22 in its first hole 21. Note that the dimensions of the components 20, 30 and the fastening of the connecting element 10 by means of the nut 50 or inside of the first component 20 as shown herein are merely exemplary. For example, alternatively, the second component 30 may be larger than the first component 20 and/or there may be another third component, e.g., to which the connecting element 10 may be fastened.

As shown in Fig. 3, the metal sheet 40 may be a washer or a sheet of metal, for example. Similar to Fig. 2, the second component 30 and optionally the first component 20 are plastically deformed in Fig. 3 by the protrusion 13 with the edge 14 when fastening the connecting element 10. However, in this case, the metal sheet 40 is plastically deformed in addition to the components 20, 30 and causes indirect deformation of the second component 30 and/or the first component 20 as seen in Fig. 3.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: connecting element
- 11: head
- 12: surface section
- 13: protrusion
- 14: edge
- 15: shank
- 16: external threading
- 20: first component
- 21: first hole
- 22: internal threading
- 30: second component
- 31: groove
- 32: deformation
- 33: second hole
- 40: metal sheet
- 50: nut
- 100: joint assembly

## Claims

1. A joint assembly (100) of a vehicle, comprising:
a connecting element (10), the connecting element (10) for connecting at least two components (20, 30) of a vehicle, the connecting element (10) comprising:
an at least partially threaded shank (15),
a head (11) having a surface section (12) coupled to an end of the shank (15), and
a protrusion (13) configured to form a sealing contact with one of the at least two components (20, 30) of the vehicle, when the connecting element (10) is fastened to the at least two components (20, 30) of the vehicle, the protrusion (13) being at least partially circumferentially arranged around the shank (15),
wherein a material of the protrusion (13) comprises a metal,
wherein the joint assembly (100) further comprises:
a first component (20) being one of the two components (20, 30) of the vehicle, and
a second component (30) being the other one of the two components (20, 30) of the vehicle,
the first component (20) being attached to the second component (30) by the connecting element (10), and
the protrusion (13) having formed a sealing contact with at least the second component (30) of the vehicle by forming a groove (31) in the second component (30), the groove (31) being formed by plastically deforming the second component (30) by means of the protrusion (13) while fastening the connecting element (10) to the at least two components (20, 30) of the vehicle,
**characterized in that** the joint assembly (100) further comprises at least one metal sheet (40) being arranged between the head (11) of the connecting element (10) and the second component (30), wherein the head (11) of the connecting element (10) is in contact with the at least one metal sheet (40), when the connecting element (10) is fastened to the at least two components (20, 30) of the vehicle.

2. The joint assembly (100) according to claim 1, the first component (20) being an external component, and the second component (30) being an internal component.

3. The joint assembly (100) according to any one of the previous claims, the material of the protrusion (13) being a metal.

4. The joint assembly (100) according to any one of the previous claims, the protrusion (13) and the head (11) being integrally formed.

5. The joint assembly (100) according to any one of the previous claims, the protrusion (13) and the head (11) being made of the same material.

6. The joint assembly (100) according to any one of the previous claims, the protrusion (13) having a tapered shape.

7. The joint assembly (100) according to any one of the previous claims, the protrusion (13) having an edge (14) facing away from the head (11).

8. The joint assembly (100) according to any one of the previous claims, the protrusion (13) being configured to plastically deform at least one of the at least two components (20, 30) of the vehicle.

9. The joint assembly (100) according to claim 8, the protrusion (13) being configured to plastically deform the at least one of the at least two components (20, 30) by forming a groove (31) into said component (20, 30), when being fastened to the at least two components (20, 30) of the vehicle.

10. A method for connecting at least two components (20, 30) of a vehicle by a connecting element (10) to form a joint assembly (100) according to any one of the previous claims, the method comprising:
arranging a first component (20) being one of the two components (20, 30) of the vehicle, and a second component (30) being the other one of the two components (20, 30) of the vehicle, such that a first hole (21) in the first component (20) and a second hole (33) in the second component (30) are in alignment with each other,
inserting the connecting element (10) at least into the second hole (33),
fastening the connecting element (10), and
plastically deforming, by the protrusion (13) of the connecting element (10), the second component (30).

11. The method according to claim 10, wherein plastically deforming the second component (30) is performed by forming a groove (31) into the second component (30).

12. The method according to claim 10 or 11 wherein a tightening torque for fastening the connecting element (10) is in the range from 20 Nm to 90 Nm.

## Patentansprüche

1. Fügeanordnung (100) eines Fahrzeugs, die Folgendes umfasst:
ein Verbindungselement (10), wobei das Verbindungselement (10) zum Verbinden von mindestens zwei Komponenten (20, 30) eines Fahrzeugs dient, wobei das Verbindungselement (10) Folgendes umfasst:
einen Schaft (15), der zumindest teilweise mit einem Gewinde versehen ist,
einen Kopf (11) mit einem Flächenabschnitt (12), der mit einem Ende des Schafts (15) gekoppelt ist, und
einen Vorsprung (13), der dazu ausgelegt ist, einen Dichtungskontakt mit einer der mindestens zwei Komponenten (20, 30) des Fahrzeugs zu bilden, wenn das Verbindungselement (10) an den mindestens zwei Komponenten (20, 30) des Fahrzeugs befestigt ist, wobei der Vorsprung (13) zumindest teilweise in Umfangsrichtung um den Schaft (15) herum angeordnet ist,
wobei das Material des Vorsprungs (13) ein Metall umfasst,
wobei die Fügeanordnung (100) ferner Folgendes umfasst:
eine erste Komponente (20), die eine der beiden Komponenten (20, 30) des Fahrzeugs ist, und
eine zweite Komponente (30), die die andere der beiden Komponenten (20, 30) des Fahrzeugs ist,
wobei die erste Komponente (20) durch das Verbindungselement (10) an der zweiten Komponente (30) befestigt ist und
wobei der Vorsprung (13) einen Dichtungskontakt mit zumindest der zweiten Komponente (30) des Fahrzeugs durch Bilden einer Nut (31) in der zweiten Komponente (30) gebildet hat, wobei die Nut (31) durch plastisches Verformen der zweiten Komponente (30) mittels des Vorsprungs (13) gebildet wird, während das Verbindungselement (10) an den mindestens zwei Komponenten (20, 30) des Fahrzeugs befestigt wird,
**dadurch gekennzeichnet, dass** die Fügeanordnung (100) ferner mindestens ein Blech (40) umfasst, das zwischen dem Kopf (11) des Verbindungselements (10) und der zweiten Komponente (30) angeordnet ist, wobei der Kopf (11) des Verbindungselements (10) in Kontakt mit dem mindestens einen Blech (40) ist, wenn das Verbindungselement (10) an den mindestens zwei Komponenten (20, 30) des Fahrzeugs befestigt ist.

2. Fügeanordnung (100) nach Anspruch 1, wobei die erste Komponente (20) eine externe Komponente ist und die zweite Komponente (30) eine interne Komponente ist.

3. Fügeanordnung (100) nach einem der vorhergehenden Ansprüche, wobei das Material des Vorsprungs (13) ein Metall ist.

4. Fügeanordnung (100) nach einem der vorhergehenden Ansprüche, wobei der Vorsprung (13) und der Kopf (11) integral ausgebildet sind.

5. Fügeanordnung (100) nach einem der vorhergehenden Ansprüche, wobei der Vorsprung (13) und der Kopf (11) aus demselben Material hergestellt sind.

6. Fügeanordnung (100) nach einem der vorhergehenden Ansprüche, wobei der Vorsprung (13) eine sich verjüngende Form aufweist.

7. Fügeanordnung (100) nach einem der vorhergehenden Ansprüche, wobei der Vorsprung (13) eine Kante (14) aufweist, die vom Kopf (11) abgewandt ist.

8. Fügeanordnung (100) nach einem der vorhergehenden Ansprüche, wobei der Vorsprung (13) dazu ausgelegt ist, mindestens eine der mindestens zwei Komponenten (20, 30) des Fahrzeugs plastisch zu verformen.

9. Fügeanordnung (100) nach Anspruch 8, wobei der Vorsprung (13) dazu ausgelegt ist, die mindestens eine der mindestens zwei Komponenten (20, 30) plastisch zu verformen, indem eine Nut (31) in der Komponente (20, 30) gebildet wird, wenn sie an den mindestens zwei Komponenten (20, 30) des Fahrzeugs befestigt wird.

10. Verfahren zum Verbinden von mindestens zwei Komponenten (20, 30) eines Fahrzeugs durch ein Verbindungselement (10), um eine Fügeanordnung (100) nach einem der vorhergehenden Ansprüche zu bilden, wobei das Verfahren Folgendes umfasst:
Anordnen einer ersten Komponente (20), die eine der zwei Komponenten (20, 30) des Fahrzeugs ist, und einer zweiten Komponente (30), die die andere der zwei Komponenten (20, 30) des Fahrzeugs ist, so dass eine erste Bohrung (21) in der ersten Komponente (20) und eine zweite Bohrung (33) in der zweiten Komponente (30) aneinander ausgerichtet sind,
Einsetzen des Verbindungselements (10) zumindest in die zweite Bohrung (33),
Befestigen des Verbindungselements (10) und
plastisches Verformen der zweiten Komponente (30) durch den Vorsprung (13) des Verbindungselements (10).

11. Verfahren nach Anspruch 10, wobei das plastische Verformen der zweiten Komponente (30) durch das Bilden einer Nut (31) in der zweiten Komponente (30) durchgeführt wird.

12. Verfahren nach Anspruch 10 oder 11, wobei ein Anzugsmoment zum Befestigen des Verbindungselements (10) im Bereich von 20 Nm bis 90 Nm liegt.

## Revendications

1. Ensemble articulation (100) d'un véhicule comprenant :
un élément de liaison (10), l'élément de liaison (10) étant destiné à relier au moins deux composants (20, 30) d'un véhicule, l'élément de liaison (10) comprenant :
une tige (15) au moins partiellement filetée,
une tête (11) présentant une section de surface (12) accouplée à une extrémité de la tige (15), et
une saillie (13) conçue pour former un contact étanche avec l'un des au moins deux composants (20, 30) du véhicule, lorsque l'élément de liaison (10) est fixé aux au moins deux composants (20, 30) du véhicule, la saillie (13) étant située au moins partiellement circonférentiellement autour de la tige (15),
un matériau de la saillie (13) comprenant un métal,
l'ensemble articulation (100) comprenant en outre :
un premier composant (20) qui est l'un des deux composants (20, 30) du véhicule, et
un second composant (30) qui est l'autre des deux composants (20, 30) du véhicule,
le premier composant (20) étant fixé au second composant (30) par l'élément de liaison (10), et
la saillie (13) ayant formé un contact étanche avec au moins le second composant (30) du véhicule en formant une rainure (31) dans le second composant (30), la rainure (31) étant formée en déformant plastiquement le second composant (30) au moyen de la saillie (13) tout en fixant l'élément de liaison (10) aux au moins deux composants (20, 30) du véhicule,
**caractérisé en ce que** l'ensemble articulation (100) comprend en outre au moins une plaque métallique (40) disposée entre la tête (11) de l'élément de liaison (10) et le second composant (30), la tête (11) de l'élément de liaison (10) étant en contact avec l'au moins une plaque métallique (40), lorsque l'élément de liaison (10) est fixé aux au moins deux composants (20, 30) du véhicule.

2. Ensemble articulation (100) selon la revendication 1, le premier composant (20) étant un composant externe, et le second composant (30) étant un composant interne.

3. Ensemble articulation (100) selon l'une quelconque des revendications précédentes, le matériau de la saillie (13) étant un métal.

4. Ensemble articulation (100) selon l'une quelconque des revendications précédentes, la saillie (13) et la tête (11) étant formées d'un seul tenant.

5. Ensemble articulation (100) selon l'une quelconque des revendications précédentes, la saillie (13) et la tête (11) étant composées du même matériau.

6. Ensemble articulation (100) selon l'une quelconque des revendications précédentes, la saillie (13) présentant une forme conique.

7. Ensemble articulation (100) selon l'une quelconque des revendications précédentes, la saillie (13) comportant un bord (14) tourné à l'opposé de la tête (11) .

8. Ensemble articulation (100) selon l'une quelconque des revendications précédentes, la saillie (13) étant conçue pour déformer plastiquement au moins l'un des au moins deux composants (20, 30) du véhicule.

9. Ensemble articulation (100) selon la revendication 8, la saillie (13) étant conçue pour déformer plastiquement l'au moins un des au moins deux composants (20, 30) en formant une rainure (31) dans ledit composant (20, 30), lorsqu'elle est fixée aux au moins deux composants (20, 30) du véhicule.

10. Procédé de liaison d'au moins deux composants (20, 30) d'un véhicule par un élément de liaison (10) pour former un ensemble articulation (100) selon l'une quelconque des revendications précédentes, le procédé comprenant les étapes consistant à :
disposer un premier composant (20) qui est l'un des deux composants (20, 30) du véhicule, et un second composant (30) qui est l'autre des deux composants (20, 30) du véhicule, de sorte qu'un premier trou (21) du premier composant (20) et un second trou (33) du second composant (30) soient en alignement l'un avec l'autre,
insérer l'élément de liaison (10) au moins dans le second trou (33),
fixer l'élément de liaison (10), et
déformer plastiquement le second composant (30) par la saillie (13) de l'élément de liaison (10).

11. Procédé selon la revendication 10, la déformation plastique du second composant (30) étant effectuée en formant une rainure (31) dans le second composant (30).

12. Procédé selon la revendication 10 ou 11, un couple de serrage pour fixer l'élément de liaison (10) étant dans la plage comprise entre 20 Nm et 90 Nm.
